# EUROPÄISCHE PATENTANMELDUNG

(11) **EP 2 756 897 A1**
(43) Veröffentlichungstag der Anmeldung: **23.07.2014**
(21) Anmeldenummer: 14151953.8
(22) Anmeldetag: 21.01.2014
(51) Int. Cl.: B22D 7/02, B32B 15/01

(54) **Verfahren zum Herstellen eines als metallischer Verbundwerkstoff ausgeführten Flachprodukts**

(30) Priorität: 21.01.2013 DE 102013100580
(71) Anmelder: Deutsche Edelstahlwerke GmbH, 58452 Witten (DE)
(72) Erfinder: Fofanov, Denis, 58455 Witten (DE); Heischeid, Christoph, 40822 Mettmann (DE); van Soest, Frank, 47918 Tönisvorst (DE)
(74) Vertreter: Cohausz & Florack

(57) **Zusammenfassung**

Die Erfindung ermöglicht es, kostengünstig aus mindestens zwei Schichten 16,17 unterschiedlicher metallischer Werkstoffe bestehende Flachprodukte S zu erzeugen, bei denen einerseits ein optimaler Zusammenhalt der Schichten 16,17 und andererseits ein steter Übergang zwischen den Eigenschaften der Schichten gegeben ist. Hierzu wird erfindungsgemäß ein einen ersten Längenabschnitt 7 aus einem ersten Werkstoff und mindestens einen zweiten Längenabschnitt 9 aus einem anderen Werkstoff sowie eine jeweils zwischen den Längenabschnitten 7,9 vorhandene Verbindungszone 10, in der die Werkstoffe miteinander vermischt sind, aufweisender metallischer Verbundwerkstoffblock 5 auf eine Warmumformtemperatur erwärmt und anschließend zu dem Flachprodukt S warmumgeformt, wobei während des Warmumformens die räumliche Orientierung der Verbindungszone 10 relativ zur ursprünglichen Längsachse Y-Y des Verbundwerkstoffblocks 5 beibehalten wird. Ein so erhaltenes Flachprodukt S besitzt eine aus dem ersten Werkstoff bestehende Schicht 17, eine aus dem anderen Werkstoff bestehende Schicht 16 sowie eine jeweils zwischen den Schichten 16,17 vorhandene Verbindungszone 10, in der die Werkstoffe miteinander vermischt sind.

## Beschreibung

Die Erfindung betrifft ein Verfahren zum Herstellen eines als metallischer Verbundwerkstoff ausgeführten Flachprodukts, das eine aus einem ersten metallischen Werkstoff bestehende Schicht und eine aus einem anderen metallischen Werkstoff bestehende, die erste Schicht abdeckende zweite Schicht umfasst, die stoffschlüssig mit der ersten Schicht verbunden ist.

Das erfindungsgemäße Verfahren ist insbesondere für die Herstellung eines als Verbundwerkstoff ausgeführten Stahlflachprodukts geeignet, das eine aus einem ersten Stahlwerkstoff bestehende erste Schicht sowie eine aus einem zweiten Stahlwerkstoff bestehende zweite Schicht aufweist, die die erste Schicht abdeckt und stoffschlüssig mit der ersten Schicht verbunden ist.

Metallische Verbundwerkstoffe sind aus einer Kombination von zwei oder mehr fest miteinander verbundenen Schichten gebildet, die aus unterschiedlichen Metallen oder Metalllegierungen bestehen. Auf diese Weise wirken die einzelnen Schichten des Verbundwerkstoffs so zusammen, dass der Verbundwerkstoff andere Eigenschaften als seine einzelnen Komponenten besitzt und Eigenschaften bereitgestellt werden können, die durch einen einzigen Werkstoff aus technischen oder wirtschaftlichen Gründen nicht erreicht werden können.

Unter "Flachprodukten", insbesondere "Stahlflachprodukten" werden hier Bleche, Platinen, Zuschnitte, Bänder und desgleichen verstanden, die üblicherweise durch einen Walzprozess erhalten werden.

Eine Möglichkeit der Herstellung von als Verbundwerkstoff ausgeführten Flachprodukten ist das Walzplattieren. Beim konventionellen Walzplattieren werden entweder auf hohe Temperaturen erwärmte, aus unterschiedlichen Werkstoffen bestehende Bänder oder Bleche aufeinander gelegt und dann ausgewalzt oder die aus den unterschiedlichen Werkstoffen bestehenden Bleche und Bänder mit hohen Verformungskräften kaltplattiert und anschließend vor der weiteren Verarbeitung diffusionsgeglüht. Ziel ist dabei jeweils die Bildung einer stoffschlüssigen Verbindung zwischen den aufeinanderliegenden Schichten, die durch den Walzendruck sowie Diffusionsvorgänge auf den aneinander stoßenden Grenzflächen entstehen sollen. Damit dieser Effekt eintritt, müssen bis zum Augenblick des Zusammenwalzens technisch reine metallische Kontaktflächen gewährleistet werden. Um die Verbindung der Komponenten bei hohen Temperaturen zu erreichen, können Zwischenlagen zwischen den einzelnen Schichten des Verbundwerkstoffs vorgesehen werden, die leichter in die jeweils miteinander zu verbindenden Schichten des Verbundwerkstoffs eindiffundieren als die Werkstoffe der betreffenden Schichten selbst.

Unabhängig davon, wie das Walzplattieren durchgeführt wird, bleiben die Schichten des erhaltenen Verbundwerkstoffs jeweils eindeutig voneinander getrennt. Dabei bilden die zwischen den Schichten der spreng- oder walzplattierten Produkte vorhandenen Grenzflächen unvermeidbar Schwachstellen, da dort die unterschiedlichen Eigenschaften der aufeinandertreffenden Schichten abrupt wechseln und ein dementsprechend harter Übergang der Eigenschaften vorliegt. Hinzu kommt die Gefahr, dass Verunreinigungen, insbesondere nichtmetallische Einschlüsse, die auf der Grenzfläche vorliegen und lokal nicht einwandfrei miteinander verschweißte Bereiche die Gebrauchseigenschaften negativ beeinflussen.

Eine Möglichkeit, einen metallischen Verbundwerkstoff herzustellen, bei dem eine optimierte Verbindung zwischen den aus den unterschiedlichen Werkstoffen bestehenden Schichten gewährleistet ist, bietet das so genannte "Sprühkompaktieren". Beim Sprühkompaktieren von Stahl wird in einem Gaszerstäuber eine Stahlschmelze in einem Schutzgasstrom in kugelförmige Tropfen zerstäubt. Durch das Gas werden die Metalltropfen schnell auf eine Temperatur abgekühlt, die üblicherweise zwischen Liquidus und Solidus liegt, in vielen Anwendungsfällen jedoch auch unter Solidus liegen kann. Die derart abgekühlten, sich mit hoher Geschwindigkeit bewegenden und eine feste oder teigige Konsistenz besitzenden Tropfen kompaktieren aufgrund der ihnen eigenen kinetischen Energie auf einem Substrat zu einem dichten Materialverbund. Über die schnelle Erstarrung aus der flüssigen Phase kann dabei der Aufbau des Gefüges des gesprühten Blocks direkt beeinflusst werden. Indem unmittelbar nacheinander zwei Werkstoffe durch Sprühkompaktieren aufeinander geschichtet werden, wird eine intensive stoffschlüssige Verbindung zwischen den einzelnen Schichten erzielt. Allerdings bleibt auch bei einem durch Sprühkompaktieren erzeugten Verbundwerkstoffblock stets eine klare Trennung zwischen den einzelnen Schichten erhalten.

Vor dem Hintergrund des voranstehend erläuterten Standes der Technik bestand die Aufgabe der Erfindung darin, ein Verfahren anzugeben, mit dem sich aus mindestens zwei Schichten unterschiedlicher metallischer Werkstoffe bestehende metallische Flachprodukte auf einfache Weise so erzeugen lassen, dass einerseits ein optimaler Zusammenhalt der Schichten und andererseits ein steter Übergang zwischen den Eigenschaften der Schichten gewährleistet ist.

Diese Aufgabe ist von der Erfindung dadurch gelöst worden, dass bei der Herstellung eines als metallischer Verbundwerkstoff ausgeführten Flachprodukts die in Anspruch 1 angegebenen Verfahrensschritte absolviert werden.

Mit dem erfindungsgemäßen Verfahren gelingt die Herstellung eines Stahlflachprodukts, das als Verbundwerkstoff ausgeführt ist und eine aus einem ersten Stahlwerkstoff bestehende erste Schicht sowie eine aus einem zweiten Stahlwerkstoff bestehende zweite Schicht aufweist, die die erste Schicht abdeckt und mit der ersten Schicht stoffschlüssig verbunden ist, wobei die Stahlwerkstoffe der jeweils aneinander anliegenden Schichten in der Verbindungszone miteinander vermischt sind und in der Verbindungszone die Konzentration des einen Stahlwerkstoffs in Richtung des jeweils anderen Stahlwerkstoffs stetig abnimmt.

Besonders zweckmäßig verwenden lässt sich ein solches erfindungsgemäß erzeugtes und beschaffenes Stahlflachprodukt für die Herstellung von Bauteilen für den ballistischen Schutz.

Vorteilhafte Ausgestaltungen der Erfindung sind in den abhängigen Ansprüchen angegeben und werden nachfolgend wie der allgemeine Erfindungsgedanke im Einzelnen erläutert.

Bei der erfindungsgemäßen Herstellung eines als metallischer Verbundwerkstoff ausgeführten Flachprodukts, das eine aus einem ersten metallischen Werkstoff bestehende Schicht und eine aus einem anderen metallischen Werkstoff bestehende Schicht umfasst, die die erste Schicht abdeckt und stoffschlüssig mit der ersten Schicht verbunden ist, wird im Arbeitsschritt a) zunächst ein metallischer Verbundwerkstoffblock bereitgestellt, der einen ersten Längenabschnitt aus dem ersten metallischen Werkstoff und einen zweiten Längenabschnitt aus dem anderen metallischen Werkstoff sowie eine jeweils zwischen den Längenabschnitten vorhandene Verbindungszone aufweist, in der die metallischen Werkstoffe miteinander vermischt sind.

Der so beschaffene Verbundwerkstoffblock wird anschließend auf eine Warmumformtemperatur erwärmt, bei der der Verformungswiderstand des Verbundwerkstoffblocks herabgesetzt ist.

Anschließend wird der Verbundwerkstoffblock zu dem Flachprodukt umgeformt, indem er in ein oder mehreren Arbeitsgängen jeweils einer Warmumformkraft ausgesetzt wird. Die Kraftrichtung, aus der die jeweilige Warmumformkraft aufgebracht wird, wird dabei so gewählt, dass während des Warmumformens die räumliche Orientierung der Verbindungszone quer zur ursprünglichen Längsachse des Verbundwerkstoffblocks beibehalten bleibt. Beim fertigen Flachprodukt erstrecken sich somit die Schichten und die zwischen ihnen vorhandene Verbindungszone jeweils über die gesamte Länge und Breite des fertigen Flachprodukts. Dabei durchsticht die ursprüngliche Längsachse des Verbundwerkstoffblocks das Flachprodukt und steht dementsprechend auf den Oberflächen, die sich zwischen den Längskanten des Flachprodukts erstrecken. Folglich findet die Verformung des Verbundwerkstoffblocks zu dem Flachprodukt zum weitaus überwiegenden Teil in einer längs seiner Längsachse ausgerichteten Richtung statt, so dass, bezogen auf die Längsachse des Verbundwerkstoffblocks, dessen Länge auf die Dicke des fertigen Flachprodukts reduziert wird. Beim fertigen Flachprodukt sind demzufolge die aufeinander liegenden, aus dem Material des jeweiligen Längsabschnitts des Verbundwerkstoffblocks bestehenden Schichten über die Verbindungszone verbunden, über die bereits beim Verbundwerkstoffblock die Längsabschnitte miteinander verbunden waren.

Im Ergebnis wird so ein Stahlflachprodukt erhalten, das als Verbundwerkstoff ausgeführt ist und eine aus einem ersten Stahlwerkstoff bestehende erste Schicht sowie eine aus einem zweiten Stahlwerkstoff bestehende zweite Schicht aufweist, die die erste Schicht abdeckt und mit der ersten Schicht stoffschlüssig verbunden ist, wobei erfindungsgemäß die Stahlwerkstoffe der jeweils aneinander anliegenden Schichten in der Verbindungszone miteinander vermischt sind und in der Verbindungszone die Konzentration des einen Stahlwerkstoffs in Richtung des jeweils anderen Stahlwerkstoffs stetig abnimmt.

Besonders geeignet ist die Erfindung für die Herstellung von Stahlflachprodukten, deren Schichten aus unterschiedlichen Stahllegierungen bestehen.

Der im Arbeitsschritt a) bereitgestellte, das Ausgangsprodukt für das erfindungsgemäße Verfahren darstellende Verbundwerkstoffblock kann beispielsweise durch Umschmelzen eines Rohblocks erzeugt werden, der aus zwei getrennt vorgefertigten Längenabschnitten zusammengesetzt ist. Die betreffenden Längenabschnitte können dazu miteinander verschweißt oder in anderer Weise so dauerhaft miteinander verbunden sein, dass die Verbindung auch unter Wärmeeinfluss aufrechterhalten bleibt. Dabei kann der Rohblock in einem Umschmelzverfahren als Elektrode eingesetzt werden. So können beispielsweise im Elektro-Schlacke-UmschmelzVerfahren (ESU-Verfahren) oder beim Vakuumumschmelzen (VU-Verfahren) aus zwei miteinander verbundenen, aus unterschiedlichen Werkstoffen bestehenden Längenabschnitten gebildete Elektroden zu jeweils einem Block umgeschmolzen werden, bei dem zwischen dem Material des einen Längenabschnitts und dem Material des anderen Längenabschnitts eine Übergangszone ausgebildet ist, in der die Werkstoffe beider Längenabschnitte kontinuierlich ineinander übergehen.

Der als Elektrode dienende Rohblock wird dazu im jeweiligen Umschmelzprozess in einem kontinuierlichen Ablauf mit ihren Längenabschnitten aufeinander folgend zunächst aufgeschmolzen, um dann wieder zu erstarren. Durch die unmittelbare Aufeinanderfolge des Umschmelzens der einzelnen Komponenten trifft die Schmelze des Werkstoffs des zweiten Längenabschnitts auf noch nicht erstarrte Schmelze des zuvor umgeschmolzenen Werkstoffs des zuvor umgeschmolzenen ersten Längenabschnitts. Infolgedessen kommt es in einem Übergangsbereich, in dem die Schmelzen beider Werkstoffe aufeinander treffen, zu einer intensiven Durchmischung beider Werkstoffe.

Die im Umschmelzverfahren hergestellten Rohlinge aus Verbundwerkstoff sind in der Regel säulen- oder quaderförmig und weisen dementsprechend einen ersten Längenabschnitt aus einem ersten Werkstoff und einen zweiten Längenabschnitt aus einem anderen Werkstoff sowie eine jeweils zwischen den Längenabschnitten vorhandene Verbindungszone auf, in der die Werkstoffe der Längenabschnitte ineinander übergehen. In dieser Verbindungszone verlaufen nicht nur die Werkstoffbestandteile, sondern damit einhergehend auch die Eigenschaften der aufeinander stoßenden Werkstoffe ineinander. Harte Eigenschaftsbrüche, wie sie in den Trennzonen der mittels mechanischer oder thermischer Fügeverfahren hergestellten Verbundwerkstoffe prozessbedingt auftreten, sind hier nicht vorhanden.

Für die Erzeugung des Verbundwerkstoffblocks durch Umschmelzen können auch eine aus dem ersten Werkstoff bestehende erste Elektrode und eine aus dem zweiten Werkstoff bestehende zweite Elektrode unabhängig voneinander bereitgestellt werden. Die Elektroden werden in diesem Fall in einem kontinuierlichen Verfahrensablauf unmittelbar aufeinander folgend in eine Umschmelzanlage eingespeist. In der Anlage wird auf dem kontinuierlich abgezogenen Verbundwerkstoffblock ein Schmelzenpool aufrecht erhalten, in den die aus der jeweiligen Elektrode gebildete Schmelze tropft. Die getrennte Bereitstellung der Elektroden erfolgt in diesem Fall typischerweise auf schmelzmetallurgischem Weg über Abgießen in Kokillen oder im Strang. Über die Länge bzw. das Volumen der Elektroden können dabei die am fertigen Verbundwerkstoffblock vorhandenen Schichtdicken der einzelnen Werkstoffe festgelegt werden.

Eine weitere, hier ebenfalls beispielhaft dargestellte Möglichkeit zum Bereitstellen des Verbundwerkstoffblocks besteht darin, dass Elektroden aus unterschiedlichen Werkstoffen zunächst wieder in konventioneller Weise schmelzmetallurgisch über Abgießen in Kokillen oder im Strang erzeugt werden. Anschließend werden sie in Längsrichtung hintereinander und koaxial zur Längsachse der Verbundelektrode angeordnet und fest miteinander verbunden, insbesondere durch Verschweißen. Auch hier kann über eine geeignete Gestaltung der aneinander anliegenden Kontaktflächen der Elektroden die Ausprägung der Verbindungszone aus der Verbundelektrode im fertig umgeschmolzenen Verbundwerkstoffblock bestimmt werden. So können die Kontaktflächen in einem 90° Winkel zur Elektrodenlänge stehen oder, um eine größere Übergangszone im umgeschmolzenen Material zu bekommen, unter einem anderen definierten Winkel in Bezug auf die Längsachse der Verbundelektrode stehen. Über die Länge bzw. das Volumen der Elektroden sind die späteren Schichtdicken definiert.

Die so kombinierte Verbundelektrode kann dann in einem VU-Ofen umgetropft werden. Wenn der Werkstoff in der Verbundelektrode wechselt, entsteht auch hier, wie bei den beiden voranstehend erläuterten Verfahrensvarianten, im Schmelzbad ein Konzentrationsunterschied, der im fortlaufenden Prozess von der chemischen Zusammensetzung des ersten Elektrodenabschnittes zur chemischen Zusammensetzung des zweiten Elektrodenabschnittes wechselt. Der so gebildete Bereich mit den ineinander verlaufenden chemischen Zusammensetzungen der beiden in der Verbindungszone aufeinander treffenden Werkstoffe bildet im fertigen Verbundwerkstoffblock die Übergangszone oder Verbindungszone. Die Größe dieser Zone ist auch hier im Wesentlichen abhängig vom Querschnitt des zu erzeugenden Blockes und vom Winkel bzw. der Form der Grenz- bzw. Kontaktfläche der Elektrodenteile der Verbundelektrode.

Wenn voranstehend die Rede davon ist, dass zwei Elektroden aus unterschiedlichen Werkstoffen zu einem Rohblock miteinander kombiniert werden, aus dem dann der Verbundwerkstoffblock erzeugt wird, ist dies jeweils nur beispielhaft gemeint. Selbstverständlich ist es ebenso möglich, auch mehr als zwei Elektroden bereitzustellen und die mehr als zwei Elektroden in einem kontinuierlichen, unterbrechungsfrei ablaufenden Umschmelzprozess zu dem Verbundwerkstoffblock umzuschmelzen. Der erhaltene Verbundwerkstoff weist dann eine entsprechende Zahl von Schichten aus den unterschiedlichen Werkstoffen auf, wobei zwischen zwei benachbarten Schichten jeweils eine Verbindungszone vorhanden ist, in der die Werkstoffe der benachbarten Schichten ineinander verlaufen.

Wenn besonders große Schichtdicken eines bestimmten Werkstoffs erzeugt werden, ist es grundsätzlich beispielsweise möglich, zwei Elektroden aus dem gleichen Werkstoff miteinander und diese dann mit einer aus einem anderen Werkstoff bestehenden Elektrode zu kombinieren. Es entsteht bei dieser Variante ein Verbundwerkstoffblock mit unterschiedlich dicken Schichten unterschiedlichen Materials. Gleiches kann selbstverständlich auch dadurch erreicht werden, dass die aus den unterschiedlichen Werkstoffen bestehenden Elektroden unterschiedliche Längen aufweisen. Ein vielschichtiger Aufbau des erfindungsgemäßen Verbundwerkstoffblocks kann dabei dadurch erzeugt werden, dass die Werkstoffe der nacheinander umgeschmolzenen Elektroden unterschiedlich sind, also jeweils zwei unterschiedliche Werkstoffschichten in dem erhaltenen Verbundwerkstoffblock benachbart zueinander angeordnet sind.

Der erfindungsgemäß bereitgestellte Verbundwerkstoffblock wird in einem oder mehreren Schritten zu dem Flachprodukt warmumgeformt. Zu diesem Zweck wird der Verbundwerkstoff in Schritt b) des erfindungsgemäßen Verfahrens auf eine Warmumformtemperatur erwärmt, bei der der Verformungswiderstand der Metallwerkstoffe, aus denen der Verbundwerkstoffblock besteht, herabgesetzt ist. Typischerweise liegt die Warmumformtemperatur des Verbundwerkstoffblocks oberhalb der Rekristallisationstemperaturen der jeweiligen Werkstoffkomponenten. Unter Warmumformen wird also hier das Umformen eines Werkstoffs bei jeder Temperatur verstanden, bei der die Festigkeitswerte des Werkstoffs der Umformaufgabe und der Maschinenleistung entsprechend herabgesetzt sind. Üblicherweise findet die Erwärmung auf die Warmumformtemperatur in einem Glühofen statt. Dabei kann während der Glühung, abhängig von der Glühzeit, Geometrie und Materialzusammensetzung des Verbundwerkstoffblocks, eine Homogenisierung des Werkstoffgefüges stattfinden.

Nach dem Erwärmen wird der Verbundwerkstoffblock im Verfahrensschritt c) zu dem Flachprodukt warmumgeformt. Die Warmumformung des in der Regel säulen- oder quaderförmigen Verbundwerkstoffblocks erfolgt in der Regel in mehreren Schritten. Um die erfindungsgemäße Umformung in einer Prozesskette zu realisieren, eignen sich beispielsweise die Umformverfahren Stauchen, Schmieden und Warmwalzen. Zusätzlich kann nach dem Warmwalzen ein Kaltwalzen des Flachprodukts erfolgen, um dessen Dicke weiter zu reduzieren.

Zwischen den jeweiligen Umformschritten kann es erforderlich sein, den Verbundwerkstoffblock oder etwaige daraus erzeugte Zwischenprodukte erneut zu erwärmen, um es wieder auf die jeweilige Warmformtemperatur zu bringen oder seine Temperatur auf einen für den jeweils folgenden Umformschritt optimalen Wert zu bringen.

Wie oben bereits erwähnt, ist es bei allen Umformschritten von besonderer Bedeutung, dass die räumliche Orientierung der Verbindungszone relativ zur ursprünglichen Längsachse des Verbundwerkstoffblocks beibehalten wird. Mit anderen Worten bedeutet dies für einen säulenförmigen Verbundwerkstoffblock, dass der Flächennormalenvektor der Grundfläche der in der Regel scheibenförmigen Verbindungszone vor und nach dem Umformen in Längsrichtung der ursprünglichen Längsachse des Verbundwerkstoffblocks ausgerichtet ist. Dementsprechend findet beispielsweise die Krafteinleitung beim Stauchen des Verbundwerkstoffblocks entlang der Längsachse des Verbundwerkstoffblocks statt.

Gemäß der Erfindung steht somit ein Verfahren zur Verfügung, mit dem sich aus mindestens zwei Schichten unterschiedlicher Werkstoffe bestehende Stahlflachprodukte auf einfache Weise erzeugen lassen, bei denen ein optimaler Zusammenhalt der Schichten gewährleistet ist und das aufgrund des stetigen, sanften Übergangs der Werkstoffe ineinander gleichzeitig optimale Gebrauchseigenschaften besitzt.

Eine für die Praxis wichtige Ausgestaltung des erfindungsgemäßen Verfahrens sieht vor, dass der erste Längenabschnitt des Verbundwerkstoffblocks aus einer ersten Metalllegierung und der zweite Längenabschnitt des Verbundwerkstoffblocks aus einer zweiten Metalllegierung besteht und dass die erste Metalllegierung mindestens ein Legierungselement mit einer hohen Konzentration aufweist, während die zweite Metalllegierung dieses Legierungselement in einer niedrigen Konzentration enthält. Durch Variation der Gehalte an bestimmten Legierungselementen können die Eigenschaften von artverwandten Metallwerkstoffen gezielt eingestellt werden. So ist es beispielsweise denkbar, bei einem Stahl das Verhältnis von Zähigkeit und Härte durch Änderung des Gehalts an einem bestimmten Legierungselement zu Gunsten der Härte oder der Zähigkeit zu variieren. Soll ein Stahlflachprodukt erzeugt werden, das auf seiner einen Seite eine hohe Härte und auf seiner anderen Seite eine optimierte Zähigkeit aufweisen soll, so kann dies in erfindungsgemäßer Weise dadurch erfolgen, dass im Arbeitsschritt a) ein Verbundwerkstoffblock zur Verfügung gestellt wird, dessen einer Längenabschnitt aus dem Stahl mit der hohen Härte und relativ geringen Zähigkeit und dessen anderer Längenabschnitt aus dem Stahl mit geringerer Härte und dafür hoher Zähigkeit besteht.

Die variierbaren Werkstoffpaarungen ergeben sich aus den unterschiedlichen Anwendungsgebieten. Von Interesse sind alle Anwendungen, bei denen mehrere Eigenschaften gefordert sind, die nicht mit einem Monowerkstoff darstellbar oder nicht wirtschaftlich darstellbar sind. Diese können aus dem Bereich der Edelbaustähle, Werkzeugstähle, RSH-Stähle bzw. weiterer metallischer Werkstoffe wie Nickellegierungen kommen. Auch Kombinationen der Werkstoffgruppen sind denkbar. Vielfältige Werkstoffkombinationen sind möglich, die durch ihre unterschiedlichen Eigenschaften geprägt sind. Beispielhaft seien hier folgende für die Praxis wichtige Eigenschaftskombinationen von miteinander zu kombinierenden Stahlwerkstoffen genannt:
- Korrosionsbeständigkeit - hohe Festigkeit
- Korrosionsbeständigkeit - niedriger Preis (unlegierter oder niedriglegierter Stahl)
- hohe Festigkeit - hohe Zähigkeit
- Verschleißbeständigkeit - hohe Zähigkeit
- hohe Wärmeleitfähigkeit - hohe Festigkeit
- hohe Warmfestigkeit - hohe Zähigkeit
- Verschleißbeständigkeit - niedriger Preis (unlegierter oder niedriglegierter Stahl)
- Unterschiede im elastischen Verformungsverhalten (Federeigenschaften)
- Unterschiede im spezifischen Gewicht (Dichte)

Die Werkstoffpaarungen sollten dabei so gewählt werden, dass in der gesamten Fertigungsprozesskette Parameter gefunden werden können, die die jeweils ausgewählten Werkstoffe gemeinsam ertragen können.

Allgemein ist zu den für die erfindungsgemäße Herstellung eines Verbundwerkstoff-Flachprodukts geeigneten Werkstoffen zu sagen, dass sich ihre Eigenschaftsprofile vielfach überschneiden. Dies gilt beispielsweise für die Eigenschaften "Festigkeit" und "Verschleißbeständigkeit". Auch Eigenschaften, die an sich nichts miteinander zu tun haben, wie Zähigkeit und Korrosionsbeständigkeit, sorgen für mehrfaches Auftreten gleicher Legierungen. Dies ist beispielsweise bei der Gruppe der nichtrostenden Austenite der Fall. Die Eigenschaft "Zähigkeit" ist zudem stark vom betrachteten Werkstoffsystem abhängig. Für feste Vergütungsstähle (z. B. Kaltarbeitsstähle, Schnellarbeitsstähle) sind K_{IC}-Werte, Schlagbiege- und Kerbschlagbiegearbeiten zäh, die z. B. für ferritische, austenitische oder Duplexstähle als inakzeptabel spröde gelten würden. Dementsprechend ergeben sich auch hier möglicherweise Überschneidungen.

In der Praxis wird ein säulenförmiger Verbundwerkstoffblock zunächst durch Stauchen zu einem Zwischenprodukt warmumgeformt werden, dessen auf die ursprüngliche Längsachse bezogene Höhe kleiner ist als seine Breite.

Im Hinblick darauf, dass die erfindungsgemäße Warmumformung vorzugsweise ein Warmwalzen des Verbundwerkstoffblocks in einer konventionellen Warmwalzanlage umfasst, ist es darüber hinaus zweckmäßig, den Verbundwerkstoffblock in eine quaderförmige, einer Bramme oder Dünnbramme entsprechende Gestalt zu überführen. Hierzu kann es erforderlich sein, den auf die Warmumformtemperatur erwärmten Verbundwerkstoffblock durch Kräfte, die quer zu seiner ursprünglichen Längsachse wirken, aus seitlicher Richtung, wie auch durch Kräfte, die längs zu seiner ursprünglichen Längsachse wirken, in eine Quaderform zu überführen. Beim anschließend durchgeführten Warmwalzen wird das aus dem Verbundwerkstoffblock geformte quaderförmige Zwischenprodukt so positioniert, dass auch hier die räumliche Orientierung der Verbindungszone des Zwischenproduktes relativ zur ursprünglichen Längsachse des Verbundwerkstoffblocks während des Warmwalzens unverändert bleibt und die Walzkräfte aus einer parallel zur Ausrichtung der ursprünglichen Längsachse des Verbundwerkstoffblocks ausgerichteten Richtung aufgebracht werden.

Ein erfindungsgemäßes Stahlflachprodukt eignet sich insbesondere zur Herstellung von Bauteilen für den ballistischen Schutz, wie sie beispielsweise für gepanzerte Fahrzeuge, für Personenschutzausrüstungen etc. benötigt werden. Hier dient beispielweise eine nach außen zur Umgebung des jeweils zu schützenden Gegenstands gerichtete harte Werkstoffschicht der Absorption der kinetischen Energie eines Projektils, während die innen angeordnete zweite Schicht des Werkstoffverbundes durch ihre hohe Zähigkeit sicherstellt, dass das Bauteil auch unter Wirkung der hohen kinetischen Energie nicht zerbricht.

Nachfolgend wird die Erfindung anhand einer Ausführungsbeispiele darstellenden Zeichnung näher erläutert. Es zeigen jeweils schematisch:

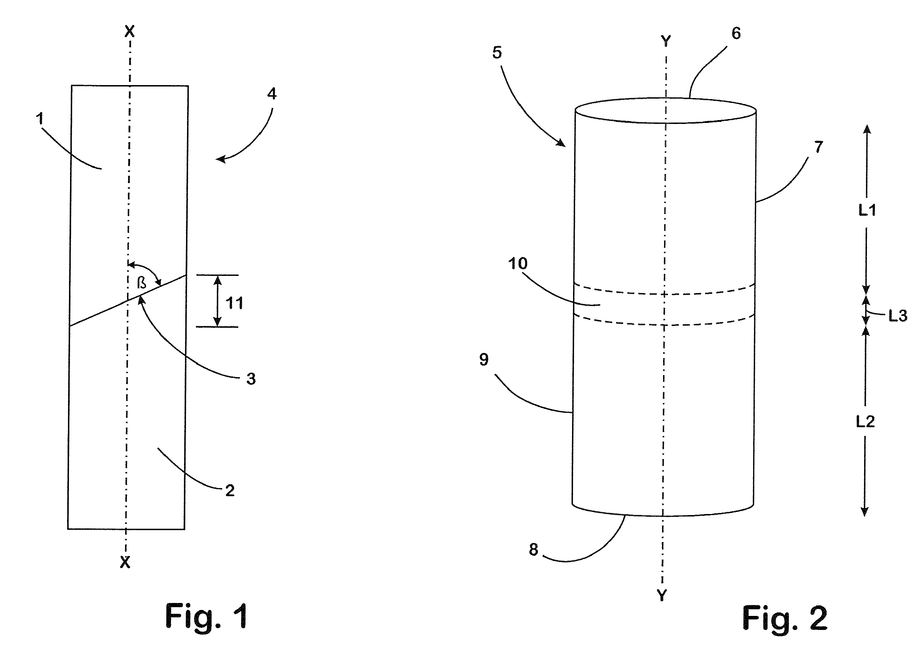

- Fig. 1: eine Elektrode zur Herstellung eines Verbundwerkstoffblocks in einer seitlichen Ansicht;
- Fig. 2: einen aus der Elektrode erschmolzenen Verbundwerkstoffblock in einer perspektivischen Ansicht;
- Fig. 3: die bei der Verformung des in Fig. 2 dargestellten Verbundwerkstoffblocks zu einem Flachprodukt durchlaufenen Verformungsschritte;
- Fig. 4: einen Ausschnitt eines als Schutz gegen Beschuss vorgesehenen Stahlflachprodukts im Querschnitt in einer vergrößerten Ansicht;
- Fig. 5: einen Härtescan des in Fig. 4 gezeigten Stahlflachprodukts;
- Fig. 6: den Härteverlauf über die Dicke des in Fig. 4 gezeigten Stahlflachprodukts.

Zwei Stähle E1,E2 mit der in Tabelle 1 angegebenen Zusammensetzung sind getrennt voneinander zu jeweils einem zylindrischen Längenabschnitt 1,2 vergossen worden. Aufgrund seiner Zusammensetzung weist der Stahl E1, aus dem der Längenabschnitt 1 bestand, eine hohe Zähigkeit bei niedrigerer Härte auf, während der Stahl E2, aus dem der Längenabschnitt 2 gegossen worden ist, eine hohe Härte bei verminderter Zähigkeit besitzt.

An ihren einander zugeordneten Stirnseiten 3 sind die Längenabschnitte 1,2 so angeschrägt worden, dass die jeweilige Stirnseite 3 die Längsachse X-X der Längenabschnitte 1,2 jeweils unter einem spitzen Winkel β schneidet. Anschließend sind die Elektroden 1,2 zueinander fluchend so ausgerichtet worden, dass sie an ihren Stirnseiten 3 dicht aneinanderliegen und eine Verbundelektrode 4 von insgesamt zylindrischer, säulenförmiger Gestalt gebildet ist. Durch Verschweißen sind die Elektroden 1,2 dann fest miteinander verbunden worden.

Die Verbundelektrode 4 ist in einer konventionellen Vakuumschmelzanlage zu einem zylindrischen, säulenartig geformten Verbundwerkstoffblock 5 umgeschmolzen worden. Der erhaltene Verbundwerkstoffblock 5 wies einen an seine erste Stirnseite 6 stoßenden, aus dem Stahl E1 bestehenden ersten Längenabschnitt 7, der sich über eine erste Teillänge L1 des Verbundwerkstoffblocks 5 erstreckt, und einen an seine zweite Stirnseite 8 stoßenden, aus dem Stahl E2 bestehenden zweiten Längenabschnitt 9 auf, der sich über eine Teillänge L2 des Verbundwerkstoffblocks 5 erstreckt. Zwischen den Längenabschnitten 7,9 ist eine sich über eine Teillänge L3 erstreckende Verbindungszone 10 entstanden, in der die Stahlwerkstoffe E1,E2 der beiden Schichten 7,9 in einem kontinuierlichen Verlauf ineinander übergehen. Die Teillängen L1 und L2 der Abschnitte sind bei anlagenbedingt vorgegebenem Durchmesser des Verbundwerkstoffblocks 5 von der Länge und dem Volumen der Elektroden 1,2 der Verbundelektrode 4 abhängig. Genauso ist die Teillänge L3, über die sich die Verbindungszone 10 erstreckt, von dem durch die schräge Ausrichtung der Kontaktfläche 3 bestimmten Überlappungsbereich 11 der Verbundelektrode 4 abhängig.

Im nächsten Schritt ist der Verbundwerkstoffblock 5 in einem hier nicht dargestellten Glühofen auf eine an die jeweilige Werkstoffpaarung angepasste Warmformtemperatur erwärmt worden.

Daraufhin ist der Verbundwerkstoffblock 5 in mehreren Stufen zu einem warmgewalzten Blech warmumgeformt worden.

Dabei ist der Verbundwerkstoffblock 5 in einem ersten Warmumformschritt W1 zunächst in einer hier nicht dargestellten Schmiedepresse Presskräften P ausgesetzt worden, die auf seine Stirnseiten 6,8 gerichtet und längs der Längsachse Y-Y des Verbundwerkstoffblocks 5 ausgerichtet waren. Auf diese Weise ist der Verbundwerkstoffblock 5 entlang seiner Längsachse Y-Y zu einem Zwischenprodukt 12 gestaucht worden, dessen Höhe H geringer ist als seine Breite B. Durch den in Breitenrichtung erfolgenden Werkstofffluss beim Stauchen ergibt sich eine von innen nach außen gerichtete, radiale Materialverdrängung, die von den Stirnseiten des Verbundwerkstoffblocks 5 zu dessen Mitte hin zunimmt. Daraus resultiert eine Auswölbung der Umfangsfläche des gestauchten Verbundwerkstoffblocks 5. Die Länge L1,L2,L3 der Längenabschnitte 7,9 und der Verbindungszone 10 nimmt im Zuge des Stauchens proportional zur Verminderung der Gesamtlänge des Verbundwerkstoffblocks 5 ab. Die räumliche Orientierung der Verbindungszone 10 relativ zur ursprünglichen Längsachse Y-Y des Verbundwerkstoffblocks 5 bleibt beim Stauchvorgang unverändert.

Nach dem ersten Warmumformschritt W1 ist das erhaltene Zwischenprodukt 12 in einem zweiten Warmumformschritt W2 um eine quer zu seiner Längsachse Y-Y ausgerichtete Achse Z-Z gewendet worden und in derselben Schmiedepresse erneut gestaucht worden. Eine Veränderung der Lage der Verbindungszone 10 in Bezug auf die ursprüngliche Längsachse Y-Y fand dementsprechend nicht statt. Das erhaltene Zwischenprodukt 12 wies bereits nach diesem Arbeitsschritt eine an die Form einer Bramme angenäherte Gestalt auf.

Anschließend wurde für einen dritten Warmumformschritt W3 das Zwischenprodukt 12 um 90° um die in dieser Stellung quer zur ursprünglichen Längsachse Y-Y ausgerichtete Achse Z-Z geschwenkt. Dann wurden mittels der Schmiedepresse erneut Kräfte entlang der ursprünglichen Längsachse Y-Y aufgebracht. Auch bei diesem dritten Warmumformschritt W3 wurde die Lage der Verbindungszone 10 in Bezug auf die ursprüngliche Längsachse Y-Y nicht verändert.

Die drei voranstehend beschriebenen Warmumformschritte W1 - W3 wurden erforderlichenfalls wiederholt, bis das nach Abschluss dieser Warmumformschritte erhaltene Zwischenprodukt 15 eine der Form einer Bramme entsprechende Quaderform aufwies.

Im Zuge der Warmumformung des Verbundwerkstoffblocks 5 zu dem Zwischenprodukt 15 ist aus den ursprünglichen Längenabschnitten 7,9 jeweils eine Schicht 16,17 entstanden ist. Die Schichten 16,17 sind dabei weiterhin durch die Verbindungszone 10 miteinander verbunden, deren Dicke D3 jedoch proportional zur über die Warmformschritte erzielten Reduzierung der Gesamtlänge des Verbundwerkstoffblocks 5 vermindert ist.

Für das anschließend als weiterer Warmumformschritt absolvierte Warmwalzen ist das quaderförmige Zwischenprodukt 15 auf die Warmumformtemperatur wiedererwärmt worden. Dann ist das Zwischenprodukt 15 in einer hier ebenfalls nicht dargestellten Warmwalzstaffel zu einem warmgewalzten Blech warmgewalzt worden. Das Zwischenprodukt 15 wurde dabei so in die Warmwalzstaffel eingeführt, dass seine Schichten 16,17 und die dazwischen liegende Verbindungszone 10 parallel zur Förderrichtung F, mit dem der Verbundwerkstoffblock 5 die Warmwalzstaffel durchläuft, und quer zur Richtung der von den Walzgerüsten der Warmwalzstaffel ausgerichteten Walzkräften ausgerichtet sind. Die Zustellung der Walzen der Walzgerüste erfolgt dementsprechend aus einer parallel zur ursprünglichen Längsachse Y-Y des Verbundwerkstoffblocks 5 ausgerichteten Richtung. Auch während des Warmwalzens ist somit die räumliche Orientierung der Verbindungszone 10 in Bezug auf die ursprüngliche Längsachse Y-Y des Verbundwerkstoffblocks 5 nicht verändert worden.

Beim erhaltenen Warmband ist dementsprechend die erste Schicht 16, die aus dem Stahl E1 des ersten Längenabschnitts 7 besteht, und die zweite Schicht 17, die aus dem Stahl E2 besteht und die erste Schicht 16 abdeckt, über die Verbindungszone 10 miteinander verbunden, die zwischen den Schichten 16,17 vorhanden ist und in der die Stähle E1,E2 in einem kontinuierlichen Verlauf ineinander übergehen.

Nach dem Warmwalzen ist das erhaltene Warmband abgekühlt und zu einem Coil gehaspelt worden. Anschließend ist es in üblicher Weise zu einem kaltgewalzten Stahlflachprodukt S kaltgewalzt worden. Dabei ist vor dem Kaltwalzen erforderlichenfalls eine Oberflächenbehandlung des Warmbands durchgeführt worden.

Das so erzeugte Stahlflachprodukt S weist, wie der ursprüngliche Verbundwerkstoffblock 5 und die Zwischenprodukte 12,15 des erfindungsgemäßen Verfahrens, die aus dem ersten Stahl E1 bestehende, nun weiter in ihrer Dicke reduzierte Schicht 16, die aus dem zweiten Stahl E2 bestehende, entsprechend in ihrer Dicke reduzierte Schicht 17 sowie die zwischen den Schichten nach wie vor vorhandene Verbindungszone 10 auf, in der die Stähle E1,E2 ineinander übergehen und die selbstverständlich ebenfalls im Zuge des Warmwalzens in ihrer Dicke reduziert worden ist.

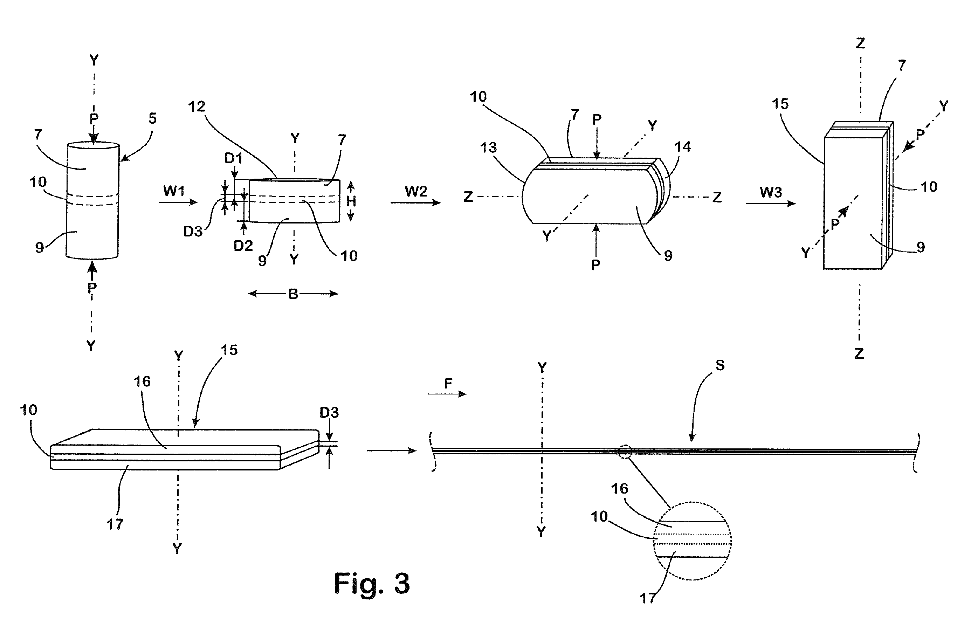

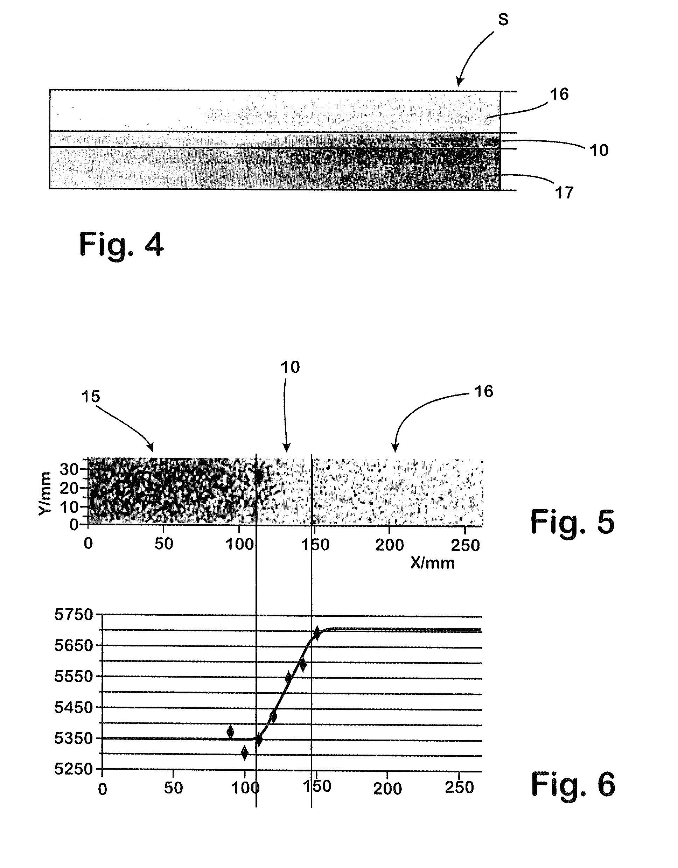

Wie aus Fig. 3 ersichtlich und in Fig. 4 besonders hervorgehoben, nimmt die Konzentration der Stähle E1,E2 in der Verbindungszone 10 ausgehend von der aus dem jeweiligen Stahl E1,E2 bestehenden Schicht 15,16 in Richtung der jeweils anderen Schicht 17,16 stetig ab. Auf diese Weise findet über die Verbindungszone 10 des Stahlflachprodukts S ein sanfter Übergang der Eigenschaften der beiden Schichten 16,17 des Flachprodukts S statt. So nimmt, wie in Fig. 5 wiedergegeben, die Härte des Stahlflachprodukts S ausgehend von der Schicht 16, die aus dem weniger harten, dafür zähen Stahl E1 besteht, über die Verbindungszone 10 in Richtung der Schicht 17 stetig zu, die aus dem härteren, jedoch weniger zähen Stahl E2 besteht.

Die Erfindung ermöglicht es somit, kostengünstig aus mindestens zwei Schichten 16,17 unterschiedlicher metallischer Werkstoffe bestehende Flachprodukte S zu erzeugen, bei denen einerseits ein optimaler Zusammenhalt der Schichten 16,17 und andererseits ein steter Übergang zwischen den Eigenschaften der Schichten gegeben ist. Hierzu wird erfindungsgemäß ein einen ersten Längenabschnitt 7 aus einem ersten Werkstoff und mindestens einen zweiten Längenabschnitt 9 aus einem anderen Werkstoff sowie eine jeweils zwischen den Längenabschnitten 7,9 vorhandene Verbindungszone 10, in der die Werkstoffe miteinander vermischt sind, aufweisender metallischer Verbundwerkstoffblock 5 auf eine Warmumformtemperatur erwärmt und anschließend zu dem Stahlflachprodukt S warmumgeformt, wobei während des Warmumformens die räumliche Orientierung der Verbindungszone 10 relativ zur ursprünglichen Längsachse Y-Y des Verbundwerkstoffblocks 5 beibehalten wird. Das so erhaltene Flachprodukt S besitzt eine aus dem ersten Werkstoff bestehende Schicht 17, eine aus dem anderen Werkstoff bestehende Schicht 16 sowie eine jeweils zwischen den Schichten 16,17 vorhandene Verbindungszone 10, in der die Werkstoffe miteinander vermischt sind.

### BEZUGSZEICHEN

- 1: erster Längenabschnitt der Verbundelektrode 4
- 2: zweiter Längenabschnitt der Verbundelektrode 4
- 3: Stirnseiten der Längenabschnitte 1,2
- 4: Verbundelektrode
- 5: Verbundwerkstoffblock
- 6,8: Stirnseiten des Verbundwerkstoffblocks 5
- 7: erster Längenabschnitt des Verbundwerkstoffblocks 5
- 9: zweiter Längenabschnitt des Verbundwerkstoffblocks 5
- 10: Verbindungszone des Verbundwerkstoffblocks 5
- 11: Überlappungsbereich der Verbundelektrode 4
- 12: Zwischenprodukt
- 13,14: Stirnseiten des Zwischenprodukts 12
- 15: Zwischenprodukt
- 16,17: Schichten des Flachprodukts S
- ß: zwischen der Längsachse X-X und der Stirnseite 3 in Seitenansicht eingeschlossener Winkel
- B: Breite
- D1,D2,D3: Dicken
- F: Förderrichtung
- H: Höhe
- L1,L2,L3: Teillängen des Verbundwerkstoffblocks 5
- P: Presskräfte
- S: Stahlflachprodukt
- X-X: Längsachse der Längenabschnitte 1,2
- Y-Y: Längsachse des Verbundwerkstoffblocks 5
- Z-Z: Achse

**Tabelle 1**

| Stahl | C | Si | Mn | P | S | Cr | Mo | Ni | Co | Ti | Al | Zr |
|---|---|---|---|---|---|---|---|---|---|---|---|---|
| E1 | 0,0037 | 0,01 | 0,02 | 0,002 | 0,0014 | 0,35 | 4,87 | 18,59 | 7,88 | 0,48 | 0,10 | 0,011 |
| E2 | 0,0058 | 0,03 | 0,04 | 0,002 | 0,0016 | 0,17 | 5,00 | 18,07 | 9,62 | 1,07 | 0,09 | 0,010 |

| | | | | | | | | | | | | |
|---|---|---|---|---|---|---|---|---|---|---|---|---|
| Alle Angaben in Gew.-%, Rest Eisen und unvermeidbare Verunreinigungen | | | | | | | | | | | | |

## Patentansprüche

1. Verfahren zum Herstellen eines als metallischer Verbundwerkstoff ausgeführten Flachprodukts (S), das eine aus einem ersten metallischen Werkstoff bestehende Schicht (17) und eine aus einem anderen metallischen Werkstoff bestehende, die erste Schicht (17) abdeckende zweite Schicht (16) aufweist, die stoffschlüssig mit der ersten Schicht (17) verbunden ist, umfassend folgende Arbeitsschritte:
a) Bereitstellen eines metallischen Verbundwerkstoffblocks (5), der einen ersten Längenabschnitt (7) aus dem ersten metallischen Werkstoff und einen zweiten Längenabschnitt (9) aus dem anderen metallischen Werkstoff sowie eine jeweils zwischen den Längenabschnitten (7,9) vorhandene Verbindungszone (10) aufweist, in der die metallischen Werkstoffe miteinander vermischt sind;
b) Erwärmen des Verbundwerkstoffblocks (5) auf eine Warmumformtemperatur und
c) Warmumformen des Verbundwerkstoffblocks (5) zu dem Flachprodukt (S) durch Aufbringen einer Warmumformkraft (P), wobei während des Warmumformens die quer zur ursprünglichen Längsachse (Y-Y) des Verbundwerkstoffblocks (5) ausgerichtete räumliche Orientierung der Verbindungszone (10) beibehalten wird.

2. Verfahren nach Anspruch 1 **dadurch gekennzeichnet, dass** der erste Längenabschnitt (7) des Verbundwerkstoffblocks (5) aus einer ersten Metalllegierung und der zweite Längenabschnitt des Verbundwerkstoffblocks (9) aus einer zweiten Metalllegierung besteht und **dass** die erste Metalllegierung mindestens ein Legierungselement mit einer hohen Konzentration aufweist, während die zweite Metalllegierung dieses Legierungselement in einer niedrigen Konzentration enthält.

3. Verfahren nach einem der voranstehenden Ansprüche **dadurch gekennzeichnet, dass** der Verbundwerkstoffblock (5) vor dem Warmumformen säulenförmig ist und die aus dem ersten Werkstoff bestehende Schicht (17), die Verbindungszone (10) und die aus dem anderen Werkstoff bestehende Schicht (16) in Richtung der Längsachse (Y-Y) des Verbundwerkstoffblocks (5) aufeinander folgend angeordnet sind.

4. Verfahren nach einem der voranstehenden Ansprüche **dadurch gekennzeichnet, dass** das Warmumformen in zwei oder mehr Arbeitsschritten durchgeführt wird.

5. Verfahren nach Anspruch 4, **dadurch gekennzeichnet, dass** der Verbundwerkstoffblock (5) im Zuge der Warmumformung zu einem Zwischenprodukt (12) geformt wird, dessen auf die ursprüngliche Längsachse (Y-Y) des Verbundwerkstoffblocks (5) bezogene Höhe (H) kleiner ist als seine Breite (B).

6. Verfahren nach Anspruch 5, **dadurch gekennzeichnet, dass** das Zwischenprodukt (12) durch eine weitere Warmformgebung in eine Quaderform gebracht wird.

7. Verfahren nach einem der Ansprüche 5 oder 6, **dadurch gekennzeichnet, dass** das Zwischenprodukt (15) durch Warmwalzen zu dem Flachprodukt (S) umgeformt wird.

8. Verfahren nach einem der voranstehenden Ansprüche, **dadurch gekennzeichnet, dass** das nach der Warmformgebung erhaltene Flachprodukt (S) zu einem kaltgewalzten Flachprodukt kaltgewalzt wird.

9. Verfahren nach einem der voranstehenden Ansprüche, **dadurch gekennzeichnet, dass** der Verbundwerkstoffblock (5) durch Umschmelzen eines Ausgangsprodukts (4) hergestellt wird, welches einen ersten aus dem ersten Werkstoff bestehenden Längenabschnitt (1) und einen mit dem ersten Längenabschnitt (1) fest verbundenen, aus dem zweiten Werkstoff bestehenden zweiten Längenabschnitt (2) aufweist.
